# EUROPÄISCHE PATENTSCHRIFT

(11) **EP 3 047 243 B1**
(45) Veröffentlichungstag und Bekanntmachung des Hinweises auf die Patenterteilung: **02.08.2023**
(21) Anmeldenummer: 14761273.3
(22) Anmeldetag: 12.08.2014
(51) Int. Cl.: G01H 9/00, G01V 1/18, G01V 1/20

(54) **AKUSTIKWANDLER, AKUSTIKWANDLERSYSTEM, OPTISCHES HYDROPHON, AKUSTIKWANDLERARRAY SOWIE WASSERFAHRZEUG**
ACOUSTIC CONVERTER, ACOUSTIC CONVERTER SYSTEM, OPTICAL HYDROPHONE, ACOUSTIC CONVERTER ARRAY AND WATERCRAFT
TRANSDUCTEUR ACOUSTIQUE, SYSTÈME DE TRANSDUCTEUR ACOUSTIQUE, HYDROPHONE OPTIQUE, ENSEMBLE DE TRANSDUCTEURS ACOUSTIQUES ET BATEAU

(30) Priorität: 17.09.2013 DE 102013110210
(43) Veröffentlichungstag der Anmeldung: 27.07.2016
(73) Patentinhaber: ATLAS ELEKTRONIK GmbH, 28309 Bremen (DE)
(72) Erfinder: REIPSCHLÄGER, Thomas, 28279 Bremen (DE); SCHULZE, Stephan, 32369 Rahden (DE)
(74) Vertreter: thyssenkrupp Intellectual Property GmbH
(86) Internationale Anmeldenummer: PCT/DE2014/100290
(87) Internationale Veröffentlichungsnummer: WO 2015/039648

(56) Entgegenhaltungen:
- US-A- 4 115 753
- US-A- 4 235 113
- US-A- 5 311 485
- US-A- 5 532 979

## Beschreibung

Die Erfindung betrifft einen Akustikwandler, insbesondere Hydrophon, mit einem Interferometer und einem zugeordneten Schwingungselement, welches von einem Träger gehaltert ist, wobei das Interferometer eine Lichtquelle, einen Signalstrahl, einen Signalstrahlteiler, einen Referenzstrahl, einen ersten Abtaststrahl, einen ersten Messstrahl und einen optischen Sensor aufweist, wobei die Lichtquelle den Signalstrahl aussendet und der Referenzstrahl und der erste Messstrahl auf dem optischen Sensor überlagert sind, wobei der erste Abtaststrahl auf das Schwingungselement gerichtet ist und der erste Messstrahl eine Dopplerverschiebung in Bezug auf den ersten Abtaststrahl aufgrund einer Schwingung des Schwingungselements ausprägt, und das Schwingungselement in einer ersten Flüssigkeit angeordnet ist, dadurch gekennzeichnet, dass das Schwingungselement ein Hohlkörper mit einem abgeschlossenen Hohlraum ist und eine Eigenresonanz oder Eigenresonanzen des Schwingungselements derart ausgelegt ist, dass die Eigenresonanz oder die Eigenresonanzen außerhalb eines Messbereichs liegt oder liegen, ein Akustikwandlersystem, welches einen gattungsgemäßen Akustikwandler aufweist, ein optisches Hydrophon, ein Akustikwandlerarray und ein Wasserfahrzeug, welches vorgenannte Bauteile aufweist.

Es sind optische Mikrofone bekannt, welche auf einen Laserstrahl basieren, der auf eine durch Schall angeregte Membran gerichtet wird und die Intensität der Reflexion mittels eines optischen Sensors auswertet. Dabei bewirkt der Schall eine Verformung (z.B. eine Schwingung oder Bewegung) der Membran, welche wiederum eine Intensitätsänderung/-verschiebung des reflektierten Lichts am Messort bewirkt.

Derartige Systeme sind in Fällen, in denen geringste Schallintensitäten gemessen werden sollen nicht oder nur bedingt einsetzbar. Zudem können derartige Systeme nicht in flüssigen Medien wie Wasser eingesetzt werden, da die Auslenkungen der Membran sehr gering sind.

Das obig beschriebene Sensorsystem besteht aus zwei Glasfasern, die in einem bestimmten, exakten Winkel zueinander angeordnet sein müssen (Lichtaus- und Lichteingang). Es ist dabei mechanisch äußerst aufwändig, einen stabilen Arbeitspunkt zu erreichen.

Aus der US 4,115,753 A ist eine faseroptische akustische Anordnung zur Detektion von akustischen Signalen im Wasser mit einer Vielzahl von optischen Hydrophonen in Linienanordnung bekannt. Hierbei erfolgt die Modulation und Reflexion eines Signalstrahls durch zwei parallel angeordnete Spiegel in einem Wassertank.

Die US 5,532,979 A beschreibt ein Verfahren und eine Vorrichtung zur Kompensation von Atmungswellen, welche durch Ausbildung von longitudinalen Vibrationen aufgrund des Zuges eines flüssigkeitsgefüllten Schlauches mit einer innenliegenden Hydrophonanordnung (Schleppantenne) entstehen. Das Verbiegen des flüssigkeitsgefüllten Schlauches aufgrund der Atmungswelle wird über eine relative Phasenverschiebung bei einer Lichtpassage durch einen Abtastarm an einem optischen Faserinterferometer bestimmt.

Die US 5,311,485 A offenbart ein miniaturfaseroptisches Hydrophon, welches auf einem Fabry-Perot-Interferometer basiert, welches innerhalb einer flexiblen Blase durch eine flexible Membran und dem freien Ende einer Monomode-Faser ausgebildet wird, wobei die flexible Membran mit einem Belüftungsloch eine Kavität abdeckt, in welche das freie Ende der Monomode-Faser geführt ist. Ein Auftreffen einer akustischen Welle auf die Außenseite der Blase verursacht eine Druckänderung im Blaseninneren, welche auf die Membran übertagen wird, wodurch die Membran in die Kavität ausgelenkt wird und das Reflexionsvermögen des Interferometers moduliert.

Aufgabe der Erfindung ist es den Stand der Technik zu verbessern.

Gelöst wird die Aufgabe durch einen Akustikwandler, insbesondere Hydrophon, mit einem Interferometer und einem zugeordneten Schwingungselement, welches von einem Träger gehaltert ist, wobei das Interferometer eine Lichtquelle, einen Signalstrahl, einen Signalstrahlteiler, einen Referenzstrahl, einen ersten Abtaststrahl, einen ersten Messstrahl und einen optischen Sensor aufweist, wobei die Lichtquelle den Signalstrahl aussendet und der Referenzstrahl und der erste Messstrahl auf dem optischen Sensor überlagert sind, wobei der erste Abtaststrahl auf das Schwingungselement gerichtet ist und der erste Messstrahl eine Dopplerverschiebung in Bezug auf den ersten Abtaststrahl aufgrund einer Schwingung des Schwingungselements ausprägt, und das Schwingungselement in einer ersten Flüssigkeit angeordnet ist, wobei das Schwingungselement ein Hohlkörper mit einem abgeschlossenen Hohlraum ist und eine Eigenresonanz oder Eigenresonanzen des Schwingungselements derart ausgelegt ist, dass die Eigenresonanz oder die Eigenresonanzen außerhalb eines Messbereichs liegt oder liegen.

Somit kann ein besonders empfindliches Mikrofon bereitgestellt werden, welches in flüssigen Medien verwendet werden kann. Dabei können sowohl Informationen anhand der Schallschnellen als auch anhand der Schalldrücke gewonnen werden.

Zudem kann somit eine vollkommen neue Technologie für Hydrophone bereitgestellt werden, bei der keine elektronischen Signale in der wässrigen Umgebung entstehen oder geleitet werden müssen. Besonders vorteilhaft ist, dass lediglich optische Signale im Wasser geführt werden müssen und die Verarbeitung der Signale beispielsweise im U-Boot-Inneren erfolgt. Das bedeutet, dass Außenbords es keiner elektrischen Spannungsversorgung mehr bedarf.

Weiterhin kann ein Schallwandler bereitgestellt werden, welcher in Dynamik und Empfindlichkeit verbesserte Eigenschaften aufweist.

Folgendes Begriffliche sei erläutert:

Ein *"*Akustikwandler*"* umfasst jede Vorrichtung, welche ein Schallsignal in eine elektrisch verarbeitbare Größe umwandelt.

Ein *"*Hydrophon*"* ist ein Akustikwandler, welcher in einer Flüssigkeit, insbesondere Wasser oder Seewasser, eingesetzt wird. Mit dem Hydrophon sind Schallsignale von einigen Hertz [Hz - 1/s] bis zu mehreren hunderttausend Hz messbar. Insbesondere können derartige Hydrophone bei aktiven und/oder passiven Sonaren eingesetzt werden.

Ein *"*Interferometer*"* ist ein technisches Gerät, welches der Interferometrie dient. Es wird für die Feststellung von Interferenzen (Überlagerungen von Wellen, hier Lichtwellen) für Präzisionsmessungen genutzt. Allgemeine Einsatzfelder sind die Längenmessung, die Brechzahlmessung, die Winkelmessung und die Spektroskopie. Vorliegendes Interferometer ist insbesondere ein Vibrometer (auch Laser-Doppler-Vibrometer genannt).

Ein *"*Schwingungselement*"* (auch als erstes Schwingungselement bezeichnet) ist allgemein ein Bauteil, welches das Schallsignal in eine mechanische Schwingung transformiert. Diese mechanische Schwingung wird dann von dem Interferometer (Vibrometer) abgetastet. Die mechanische Schwingung ist proportional zur Schwingung des Schallsignals oder es erfolgt eine Kalibrierung, sodass auf Grundlage der gemessenen mechanischen Schwingung mittels eines Korrekturfaktors das Schallsignal bestimmbar ist. Die Schwingungselemente können hohe Licht reflektierende Eigenschaften aufweisen, da somit die Messstrahlintensität erhöht werden kann.

Das Schwingungselement wird durch einen *"*Träger*"* gelagert oder fixiert. Für den Fall, dass beispielsweise das Schwingungselement eine Membran ist, kann der Träger die Membran beispielsweise mittels eines Rahmens spannen oder ortsfest lagern.

Die *"*Lichtquelle*"* kann sämtliche Lichtquellen umfassen, welche interferenzfähige (kohärente) Lichtsignale aussendet. Insbesondere ist die Lichtquelle ein Laser (Light Amplifier by Stimulated Emission of Radiation).

Der *"*Signalstrahl*"* (auch als erster Signalstrahl bezeichnet) wird von der Lichtquelle ausgesandt. Dieser wird auf ein optisch trennendes Element, insbesondere auf einen halbdurchlässigen Spiegel, gerichtet, wodurch der Signalstrahl in einen Referenzstrahl und einen ersten Abtaststrahl aufgeteilt wird.

Der *"*Referenzstrahl*"* (auch als erster Referenzstrahl bezeichnet) dient dem Interferieren mit einem ersten Messsignal.

Der *"*erste Abtaststrahl*"* ist der (Licht-)Strahl, welcher auf das Schwingungselement, beispielsweise orthogonal zu dessen Schwingungsfläche, gerichtet wird. Da sämtliche hier beschriebenen Strahlen zumindest teilweise in Lichtwellenleiter geführt sein können, kann der erste Abtaststrahl insbesondere mittels einer Auskoppeloptik (z.B. Sammellinse) am Ende eines Lichtwellenleiters auf das Schwingungselement gelenkt oder fokussiert werden.

Der *"*erste Messstrahl*"* entsteht insbesondere dadurch, dass eine Schwingung des Schwingungselements eine Dopplerverschiebung des Abtaststrahls bewirkt. Dieser Messstrahl wird vom Schwingungselement reflektiert oder gestreut und kann durch den identischen Lichtwellenleiter oder einen alternativen Lichtwellenleiter abseits des Abtaststrahls geführt werden. Vorliegend kann in der ersten diesbezüglichen Alternative die Auskoppeloptik des Lichtwellenleiters des Abtaststrahls gleichzeitig als Einkoppeloptik für den Messstrahl verwendet werden.

Der *"*Signalstrahlteiler*"* teilt den Signalstrahl insbesondere in den Abtaststrahl und den Referenzstrahl auf. Beispielsweise ist der Signalstrahlteiler ein halbdurchlässiger Spiegel, sodass der Referenzstrahl und der Abtaststrahl jeweils ca. die gleiche Intensität aufweisen.

Im einfachsten Fall ist der "optischer Sensor" eine Photodiode, jedoch können auch positionssensitive Sensoren wie beispielsweise CCDs (Charge Coupled Device), PSDs (Position Sensitive Device) und Lateraldioden eigesetzt werden.

Insbesondere durch *"*Überlagerung*"* von Referenzstrahl und Messstrahl auf der Sensorfläche des optischen Sensors wird eine Interferenz detektiert.

Die *"*Dopplerverschiebung*"* ist eine Frequenz-/Wellenlängenverschiebung aufgrund des Doppler Effekts. Der Doppler-Effekt (selten Doppler-Fizeau-Effekt) ist die zeitliche Stauchung oder Dehnung eines Signals bei Veränderungen des Abstands - hier durch das Schwingen des Schwingungselements - zwischen Sender (z.B. Lichtwellenleiter des Abtaststrahls) und Empfänger (z.B. Lichtwellenleiter des Messstrahls) während der Dauer des Signals. Ursache ist die Veränderung der Laufzeit. Dieser rein kinematische Effekt tritt bei allen Signalen auf, welche sich mit einer bestimmten Geschwindigkeit, meist Lichtgeschwindigkeit oder Schallgeschwindigkeit, ausbreiten. Da sich das Signal in einem Medium (Wasser oder Seewasser) ausbreitet, kann vorliegend der Bewegungszustand des Mediums berücksichtigt werden.

Die *"*Schwingung*"* ist insbesondere die durch die Schallschwingung induzierte mechanische Schwingung des Schwingungselements.

Die *"*erste Flüssigkeit*"* umfasst insbesondere Wasser, Meerwasser und Seewasser. Insbesondere sind sämtliche See- und Meerwasser umfasst, welche in Gewässern der Erde vorkommen. Das See- oder Meerwasser unterscheidet sich insbesondere durch unterschiedliche Salzgehalte. So weist Wasser des Mittelmeers regelmäßig höhere Salzgehalte als das Wasser des Pazifiks auf.

In einer weiteren Ausführungsform sind der Signalstrahl und/oder der Referenzstrahl und/oder der erste Abtaststrahl und/oder erste Messstrahl teilweise oder vollständig in einem Lichtleiter geführt. Somit kann den jeweiligen Strahlen ein bestimmter Verlauf aufgeprägt werden ohne aufwändige Optiken zu verwenden.

Der *"*Lichtleiter*"*, auch Lichtwellenleiter (LWL) oder Lichtleitkabel (LLK) genannt, ist ein insbesondere aus Lichtleitern bestehendes und teilweise mit Steckverbindern konfektioniertes Kabel oder eine entsprechende Leitung zur Übertragung von Licht. Das Licht wird dabei beispielsweise in Fasern aus Quarzglas oder Kunststoff (polymere optische Faser) geführt. Derartige Kabel oder Leitungen werden häufig auch als Glasfaserkabel bezeichnet, wobei in diesen typischerweise mehrere Lichtwellenleiter gebündelt werden, die zudem zum Schutz und zur Stabilisierung der einzelnen Fasern noch mechanisch verstärkt sind.

Physikalisch gesehen sind Lichtleiter dielektrische Wellenleiter. Sie sind beispielsweise aus konzentrischen Schichten aufgebaut; im Zentrum liegt der lichtführende Kern, der umgeben ist von einem Mantel mit einem etwas niedrigeren Brechungsindex sowie von weiteren Schutzschichten aus Kunststoff. Je nach Anwendungsfall hat der Kern einen Durchmesser von einigen Mikrometern bis zu über einem Millimeter. Man unterscheidet Lichtwellenleiter nach dem Verlauf des Brechungsindexes zwischen Kern und Mantel (Stufenindex- oder Gradientenindexfasern) und der Anzahl von ausbreitungsfähigen Schwingungsmoden, die durch den Kerndurchmesser limitiert wird.

Multimodefasern, in denen sich mehrere tausend Moden ausbreiten können, haben ein stark strukturiertes Strahlprofil. In Monomodefasern, die einen sehr kleinen Kerndurchmesser haben, kann sich nur die sogenannte Grundmode ausbreiten, deren Intensität in radialer Richtung näherungsweise normalverteilt ist. Vorliegender Lichtleiter kann sowohl eine Monomodefaser als auch eine Multimodenfaser sein.

Lichtwellenleiter werden vor allem in der Nachrichtentechnik als Übertragungsmedium für leitungsgebundene Kommunikationssysteme verwendet und haben hier, weil sie höhere Reichweiten und Übertragungsraten erreichen, die elektrische Übertragung auf Kupferkabeln in vielen Bereichen ersetzt. Vorliegend werden insbesondere Optiken und Optoelektroniken der Nachrichtentechnik verwendet, da diese leicht auf die Bedingungen für Hydrophone anpassbar und kostengünstig sind.

Um das Schwingungselement vor Zerstörung zu bewahren und/oder ein optimiertes Detektieren der mechanischen Schwingung des Schwingungselements zu erreichen, ist eine Eigenresonanz des Schwingungselements derart ausgelegt, dass die Eigenresonanzen (z.B. Dickenresonanz, Torsionsresonanz, Biegeresonanz) außerhalb eines Messbereichs liegen.

Eine *"*Eigenresonanz*"*, auch Eigenfrequenz genannt, eines schwingfähigen Systems (hier das Schwingungselement) ist eine Frequenz, mit der das System nach einmaliger Anregung als Eigenform schwingen kann.

Wenn einem solchen System von außen Schwingungen aufgezwungen werden, deren Frequenz mit der Eigenfrequenz übereinstimmt, reagiert das System bei schwacher Dämpfung mit besonders großen Amplituden, was als Resonanz bezeichnet wird.

Der *"*Messbereich*"* ist durch eine mechanische Minimalfrequenz und eine mechanische Maximalfrequenz bestimmt, welche durch eine Minimalfrequenz und eine Maximalfrequenz des zu messenden Schalls bestimmt ist. Dies können das gesamte zu erwartende Schallspektrum oder auch Schallspektrum-Bänder sein. Bei einem Schleppsonar sind beispielsweise häufig die tiefen Unterwasserschallfrequenzen interessant (typisch 10 Hz bis 2,4 kHz aber auch ein erweiterter Bereich bis 20 kHz und darüber hinaus ist interessant). Bei einem Bug- oder Hecksonar können diese beispielsweise auch höhere Frequenzen sein (z.B. 10 kHz bis 600 kHz für Intercept-Anwendungen).

In einer weiteren Ausführungsform ist das Schwingungselement akustisch transparent.

Eine "akustische Transparenz" ist insbesondere dann gegeben, wenn bei einem Schallsignaldurchtritt durch das vom Medium (Seewasser) umgebene Schwingungselement der Schall vor dem Schwingungselement und nach dem Schwingungselement im Wesentlichen identisch ist (im Wesentlichen keine relevante Reflektion und Absorption von Schallenergie). Eine akustische Transparenz ist ebenfalls dann gegeben, wenn das Schallsignal am Ort des Schwingungselements eines Aufbaus mit zu einem Aufbau ohne Schwingungselement im Wesentlichen identisch ist. Ein charakteristischer Transmissionskoeffizient des verwendeten Schwingungselements ist typisch ≥ 0,99 im spektralen Messbereich.

Um das Schwingungselement vor der ersten Flüssigkeit zu schützen, kann das Schwingungselement durch ein Schutzmedium, insbesondere einer zweiten Flüssigkeit, gekapselt sein. Dies ist insbesondere vorteilhaft, da See- oder Meerwasser eine chemisch aggressive Umgebung für das Schwingungselement darstellen kann. Auch biologische Ablagerungen von Algen oder Muscheln auf dem Schwingungselement können verhindert werden.

Die *"*Kapselung*"* kann beispielsweise durch einen Käfig erfolgen, in welchem das Schwingungselement gelagert ist und welcher beispielsweise Schlitze aufweist, um den Schall durchzulassen. Damit die zweite Flüssigkeit nicht austritt, kann der Käfig durch eine Schutzmembran umschlossen sein, welche wiederum insbesondere akustisch transparent ist. Beispielsweise kann die Schutzmembran eine dünne Gummimembran sein.

Das Schutzmedium kann sowohl ein Gas als auch eine Flüssigkeit sein. Als Gase werden insbesondere inerte Gase wie Stickstoff oder Edelgase verwendet.

Die "zweite Flüssigkeit" weist insbesondere bezüglich der Schallausbreitung ähnliche physikalische Eigenschaften (insbesondere die gleiche Schallkennimpedanz, entspricht der Dichte multipliziert mit der Schallausbreitungsgeschwindigkeit) wie See- oder Meerwasser auf. Besonders vorteilhaft haben sich Öle wie Paraffinöl erwiesen.

Erfindungsgemäß ist das Schwingungselement ein Hohlkörper, insbesondere eine Hohlkugel, mit einem abgeschlossenen Hohlraum. Dadurch kann ein Hydrophon bereitgestellt werden, welches darauf basiert, dass das Schallsignal physikalisch durch Auswerten des Schalldrucks bestimmt wird oder dass die mechanische Bewegung des Schwingungselements im Wesentlichen auf Schallwechseldruck und in vernachlässigbarer Weise auf Schallschnelle reagiert. In dieser Ausführungsform kann die Flüssigkeit auch ein Gas (z.B. Luft) sein. Somit kann ein "gewöhnliches" akustisches Mikrofon bereitgestellt werden.

Weiterhin kann ein Schallwandler bereitgestellt werden, welcher in Dynamik und Empfindlichkeit gegenüber Mikrophonen an Luft verbesserte Eigenschaften aufweist.

Ein *"*Hohlkörper*"* ist allgemein ein Körper, der einen von ihm eingeschlossenen Hohlraum aufweist. Dabei ist eine Wandstärke einer Körperwand derart ausgelegt, dass der Schalldruck eine Ortsveränderung der Körperwände relativ zueinander bewirkt.

Zudem kann es besonders vorteilhaft sein, wenn ein Durchmesser des Hohlkörpers sehr viel kleiner als die Wellenlänge der größten zu messenden Frequenz ist.

Der Hohlkörper kann ein Quader oder Würfel sein, wobei bevorzugt der Hohlkörper eine Kugelform aufweist.

Der *"*Hohlraum*"* weist insbesondere eine geringere Dichte als das Medium auf, welches die Körperwand des Hohlkörpers umgibt. Das Material des Hohlkörpers weist insbesondere die Schallkennimpedanz des umgebenden Mediums (z.B. Seewasser) auf, sodass ideale Schallübertragungseigenschaften gewährleistet werden können. Um den Druck auf die Grenzfläche zu maximieren, kann der Hohlkörper schallhart ausgeführt sein.

In einer diesbezüglichen Ausführungsform weist der Hohlraum ein mittels (Schall-)Druck kompressibles Medium auf. Das Medium kann beispielsweise Luft oder ein inertes Gas sein. Auch kann der Hohlraum vakuumiert sein, sodass dann das Medium ein Gas mit besonders niedrigem (Partial)Druck ist.

Das *"*druckkompressible Medium*"* gewährleistet insbesondere eine ausreichende Ortsveränderung der Körperwand.

Um ein besonders einfach aufgebautes Schwingungselement bereitzustellen, ist das Schwingungselement eine Membran.

Eine *"*Membran*"*, auch Schwingungsmembran oder Oszillationsmembrane genannt, ist allgemein eine dünne Haut oder Folie, die Schwingungen erzeugen, modifizieren und/oder wiedergeben soll.

Die Membran kann beispielsweise mittels Ätztechniken insbesondere aus Silizium gefertigt sein.

Jede Membran kann mehrere Eigenresonanzen (Partialschwingungen) aufweisen, welche jedoch häufig stark gedämpft sind. Die Membran kann in einem festen Rahmen (Träger) eingespannt sein analog wie bei einer Trommel, der Rand der Membran kann aber auch frei schwingen beispielsweise wie bei einem akustischen Lautsprecher. Beide Varianten unterscheiden sich sehr deutlich bezüglich möglicher Moden und Frequenzen. Besonders vorteilhaft kann es sein, wenn die Membran möglichst spannungsfrei gelagert ist.

Allgemein kann die Membran zur Erzeugung, Verstärkung, Aufnahme, Dämpfung oder Messung der Schwingung dienen. Die Anregung zu Membranschwingungen setzt voraus, dass eine dynamisch einwirkende äußere Kraft (hier durch den Unterwasserschall) vorhanden ist, die beispielsweise durch die Zugspannung durch eine Randeinspannung gegeben ist.

Für eine Membran kann ein frequenzabhängiger Korrekturfaktur ermittelt werden, falls beispielsweise die Masse der Membran nicht vernachlässigbar ist.

Um mehrere Schwingungselemente gleichzeitig abfragen zu können und eine kostengünstige Lichtquelle bereitzustellen, ist die Lichtquelle eine breitbandige Laserlichtquelle, wie sie beispielsweise in der optischen Nachrichtentechnik verwendet wird.

Die *"*Breitbandlichtquelle*"* besteht beispielsweise aus einer dotierten Spezialglasfaser, welche wiederum mit einem leistungsstarken Diodenlaser optisch gepumpt wird. Derartige Konzepte werden bei Faserverstärkern eingesetzt und eignen sich grundsätzlich auch sehr gut zur Erzeugung spektral breitbandiger Superlumineszenzstrahlung. Bevorzugt wird eine Emission im Spektralbereich um 1,5 µm angestrebt, da dann Standard-Faserkomponenten (Stecker und Verbinder) eingesetzt werden können. Auch können Superlumineszenzdioden (SLEDs) eingesetzt werden, jedoch hat die gepumpte optische Spezialfaser den Vorteil, dass die Breitbandstrahlung direkt in der Faser erzeugt wird, damit Koppelverluste minimiert werden und durch geeignete Dotierung des Fasermaterials der Emissionsbereich eingestellt werden kann.

Um insbesondere jedem Schwingungslement kohärentes Licht einer individuellen Wellenlänge bereitzustellen, kann der Abtaststrahl gefiltert oder durch ein Filter, insbesondere ein Faser-Bragg-Gitter-Filter, geführt sein.

Das *"*Filter*"* ist insbesondere ein optisches Interferenzfilter. Die Faser-Bragg-Gitter haben dabei den Vorteil, dass diese dem Lichtwellenleiter bereits aufgeprägt werden können. Dieses Aufprägen erfolgt beispielsweise mittels Femtosekundenlasern.

In einem weiteren Aspekt der Erfindung wird die Aufgabe gelöst durch ein Akustikwandlersystem, welches einen Akustikwandler nach einem der vorherigen Ansprüche aufweist, mit einem zweiten und/oder dritten Abtaststrahl und einem zweiten und/oder dritten Messstrahl, wobei die Messstrahlen derart angeordnet sind, dass die Messstrahlen einen Winkel oder einen Raumwinkel bilden.

Dadurch kann besonders vorteilhaft eine Raum- und/oder Richtungsinformation aus dem Unterwasserschall gewonnen werden. So kann eine Richtung einer schallemittierenden Quelle bestimmt werden.

Das *"*Akustikwandlersystem*"* kann auch als räumliches Hydrophon, auch als Vektorsensor bezeichnet, bezeichnet werden.

Durch den *"*zweiten/dritten Abtaststrahl*"* kann ein anderer Ort des Schwingungselements oder ein anders orientiertes Schwingungselement abgetastet werden.

Der *"*zweite/dritte Messstrahl*"* ist konsequenter Weise der zum zweiten/dritten Abtaststrahl zugehörige Messstrahl.

Der *"*Raumwinkel*"* ist der Öffnungswinkel mit dem die Umgebung belauscht wird. Der Raumwinkel ergibt sich insbesondere dadurch, dass abgetastete Schwingungsflächen des Schwingungselements oder der Schwingungselemente zueinander einen Winkel aufweisen.

Die einfachste Realisierung erfolgt über drei jeweils zueinander um 90° versetzte Flächenmembranen, welche jeweils durch einen Abtaststrahl beaufschlagt werden und jeweils einen Messstrahl aussenden.

Auch kann das Schwingungselement als Würfel mit drei Flächen mit einzelnen Schwingungselementen und drei "offenen" Laserdurchtrittsflächen ausgestaltet sein, dessen orthogonal zueinander stehenden Seitenflächen schwingungstechnisch vermessen werden.

Nach einem zusätzlichen Aspekt der Erfindung wird die Aufgabe gelöst durch ein Akustikwandlerarray, welches wenigstens ein zuvor beschriebenes Akustikwandlersystem und/oder wenigstens einen zuvor beschriebenen Akustikwandler aufweist. Bei einem solchen Array kann beispielsweise durch Triangulation zusätzlich die Entfernung zu einem schallemittierenden Objekt bestimmt werden.

Ein solches *"*Akustikwandlerarray*"* kann auch als Hydrophonarray bezeichnet werden. Dieses kann beispielsweise für Synthetic Apertur Sonare eingesetzt werden.

Weiterhin wird die Aufgabe gelöst durch ein optisches Hydrophon mit einem optisch interferometrisch abgetasteten Schwingungselement und einem Auswertesensor.

In einem weiteren Aspekt der Erfindung wird die Aufgabe gelöst durch ein Sonar, welches ein zuvor beschriebenes optisches Hydrophon und/oder ein zuvor beschriebenes Akustikwandlerarray und/oder ein zuvor beschriebenes Akustikwandlersystem und/oder einen zuvor beschriebenen Akustikwandler aufweist.

Ein *"*Sonar*"* ist eine *"*Vorrichtung zur Ortung von Gegenständen im Raum und unter Wasser mittels ausgesandter Schallimpulse*"*. Das Wort ist ein englisches Akronym von sound navigation and ranging, was sich mit Schall-Navigation und -Entfernungsbestimmung übersetzen lässt.

Sonar-Messtechniken nutzen die Tatsache aus, dass sich Schall unter Wasser insbesondere bei hohen Frequenzen sehr viel verlustärmer ausbreitet als in der Luft. Aus historischen Gründen wird begrifflich unterschieden zwischen Sonargeräten (kurz als *"*Sonare*"* bezeichnet), die überwiegend horizontal, und Echoloten, die überwiegend vertikal orten.

Schallsignale können bei der Echoortung (aktives Sonar, hierzu zählt auch das Echolot) oder zur Lokalisation von Objekten eingesetzt werden, die selbst Schall emittieren.

Aktive Sonare benutzen das Echoprinzip und strahlen also selbst ein Signal aus, dessen Echo sie empfangen, aus dem sie über Laufzeit des Echos die Entfernung bestimmen. Echolote gehören zu diesem Typ.

Nach einem zusätzlichen Aspekt der Erfindung wird die Aufgabe gelöst durch ein Wasserfahrzeug, insbesondere Schiff oder U-Boot, welches ein zuvor beschriebenes Sonar und/oder ein zuvor beschriebenes optisches Hydrophon und/oder ein zuvor beschriebenes Akustikwandlerarray und/oder ein zuvor beschriebenes Akustikwandlersystem und/oder einen zuvor beschriebenen Akustikwandler aufweist.

Unter *"*Wasserfahrzeuge*"* werden alle Fahrzeuge verstanden, welche sich bemannt oder unbemannt auf oder unter Wasser bewegen können oder sich auf oder unter Wasser befinden. So sind Schiffe, Torpedos, Bojen, U-Boote, AUVs (Autonomous Underwater Vehicle) und ROVs (Remotely Operated Vehicle) vorliegend als Unterwasserfahrzeuge zu verstehen.

Im Weiteren wird die Erfindung anhand von Ausführungsbeispielen erläutert. Es zeigen
- Figur 1: eine schematische Darstellung eines Mikrophons, welches einen Schalldruck an einer Hohlkugel bestimmt und
- Figur 2: eine schematische Darstellung eines Hydrophons, welches eine Schallschnelle an einer in Wasser gelagerten Membran auswertet.

Ein Mikrofon 101 weist eine Breitbandlichtquelle 111 auf. Die Lichtquelle 111 sendet den Signalstrahl 113 aus. Der Signalstrahl 113 wird mittels eines Lichtwellenleiters auf einen halbdurchlässigen Spiegel (nicht dargestellt) gelenkt. Dieser halbdurchlässige Spiegel teilt den Signalstrahl 113 in einen Referenzstrahl 115 und einen Abtaststrahl 117 auf.

Der Referenzstrahl 115 wird mittels eines Lichtwellenleiters geführt. Das Spektrum 116 des Referenzstrahl 115 entspricht dem Spektrum der Lichtquelle 111, wobei die Intensität (Ordinate) ca. halbiert ist.

Der Abtaststrahl 117 wird ebenfalls mittels eines Lichtwellenleiters 121 geführt. Der Lichtwellenleiter 121 teilt sich in 5 Lichtwellenleitern auf, welche auf eine Oberfläche der vakuumierten Hohlkugeln 251 geleitet werden.

In den Lichtwellenleiter der fünf Abtaststrahlen 117 ist ein Faser-Bragg-Gitter 123 eingeprägt. Die jeweiligen Faser-Bragg-Gitter 123 unterscheiden sich geringfügig, sodass die jeweiligen Spektren 118 des Abtaststrahls 117 in der Wellenlänge λ verschoben sind.

Am Ende des Lichtwellenleiters des Abtaststrahls 117 ist eine Auskoppeloptik (nicht dargestellt) angeordnet. Diese Auskoppeloptik fokussiert den jeweiligen Abtaststrahl 117 auf die Oberfläche der zugehörigen Hohlkugel 251.

Der Hohlraum der Hohlkugel 251 ist vakuumiert und das Medium zwischen der Auskoppelelektronik des Lichtwellenleiters des Abtaststrahls 117 und der Hohlkugel 251 ist Luft.

Die Hohlkugeln 251 sind reflektierend ausgestaltet, sodass davorliegend für den Messstrahl 119 der gleiche Lichtwellenleiter verwendet wird wie für den Abtaststrahl 117, wobei die Auskoppeloptik vorliegend zusätzlich als Einkoppeloptik dient. Dabei wird das an den Hohlkugeln 251 reflektierte Signal über die Einkoppeloptik (Sammellinse) zurück in den Lichtwellenleiter geführt.

Die einzelnen Messstrahlen 119 werden auf einem Lichtwellenleiter vereint und als Messstrahl 119 zum Arrayed Waveguide Grating (AWG) 131 geleitet. Durch das Zusammenführen der einzelnen Messstrahlen 119 ergibt sich das Spektrum 120.

Das AWG 131 spaltet wiederum das Signal des zusammengeführten Messstrahls 119 in Einzelsignale auf, sodass in dem Messfaserbündel 132 am Ausgang des AWG's 131 separierte Detektormessstrahlen vorliegen.

Jede einzelne Faser des Messfaserbündels 132 wird zu dem jeweiligen Detektor 141 geleitet. In jeder dieser einzeln geleiteten Fasern wird der Detektormessstrahl 143 geführt.

Analog wird bei dem Referenzstrahl 115 vorgegangen, welcher ebenfalls auf ein AWG 133 geleitet wird, welches die einzelnen Signale wiederum in einem Referenzfaserbündel 134 aufteilt. Jede einzelne dieser Fasern wird wiederum durch eine Bragg-Zelle 135 gleitet und als Detektorreferenzstrahl 145 zu dem entsprechenden Photodetektor 141 geführt.

Der Detektorreferenzstrahl 145 und der Detektormessstrahl 143 werden am Photodetektor 141 optisch überlagert.

Das Bestimmen eines Schallsignals erfolgt wie folgt:
Trifft bei der beschriebenen Vorrichtung ein luftübertragenes Schallsignal auf die Hohlkugel 251, sorgt der Druckanteil des Schallsignals für eine Kompression der Hohlkugel 251. Diese Kompression führt dazu, dass eine Doppler-Verschiebung des Abtaststrahls 117 entsprechend der mechanischen Schwingung der Hohlkugel 251 erfolgt.

Dieses Doppler beeinflusste Signal wird als Messstrahl 119 für jede einzelne Hohlkugel 251 über den Lichtwellenleiter 121 zu dem AWG 131 als (Gesamt-)Messstrahl 119 geführt. Die einzelnen durch das AWG 131 separierten Detektormessstrahlen 143 werden auf den jeweiligen Photodetektor 141 mit dem zugehörigen Detektorreferenzstrahl 145 überlagert.

Aufgrund der Doppler-Verschiebung ändert sich das Signal am Photodetektor 141 entsprechend dem mechanischen Schwingungssignal der Hohlkugel 251. Somit kann für jede einzelne Hohlkugel 251 das entsprechende Schall-Signal ermittelt und anschließend aufbereitet werden.

Die hier beschriebene Anordnung kann auch derart erfolgen, dass die Hohlkugel 251 sich in Seewasser befindet.

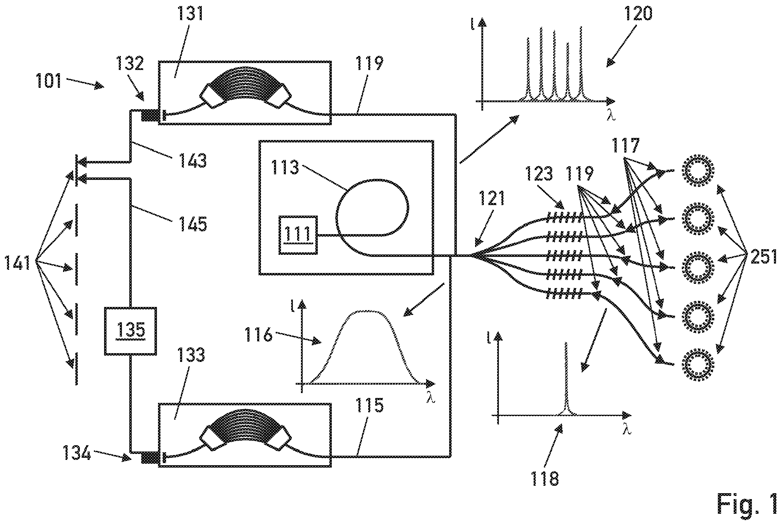

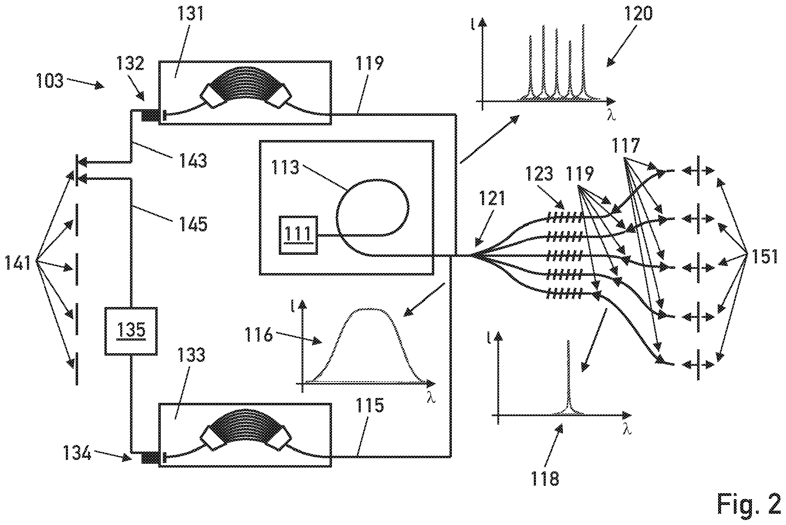

Ebenfalls im Seewasser kann das Hydrophon 103 gemäß Figur 2 verwendet werden. Vorliegend wird anstatt einer Hohlkugel 251 eine Membran 151 verwendet. Der Ablauf der Messung erfolgt analog zu der in Figur 1, wobei vorliegend nicht der Druck des Schalls, sondern die Schallschnelle des Schalls bestimmt wird.

## Patentansprüche

1. Akustikwandler (101), insbesondere Hydrophon (103), mit einem Interferometer und einem zugeordneten Schwingungselement (251), welches von einem Träger gehaltert ist, wobei das Interferometer eine Lichtquelle (111), einen Signalstrahl (113), einen Signalstrahlteiler, einen Referenzstrahl (115), einen ersten Abtaststrahl (117), einen ersten Messstrahl (119) und einen optischen Sensor (141) aufweist, wobei die Lichtquelle den Signalstrahl aussendet und der Referenzstrahl und der erste Messstrahl auf dem optischen Sensor überlagert sind, wobei der erste Abtaststrahl auf das Schwingungselement gerichtet ist und der erste Messstrahl eine Dopplerverschiebung in Bezug auf den ersten Abtaststrahl aufgrund einer Schwingung des Schwingungselements ausprägt, und das Schwingungselement in einer ersten Flüssigkeit angeordnet ist, **dadurch gekennzeichnet, dass** das Schwingungselement ein Hohlkörper mit einem abgeschlossenen Hohlraum ist und eine Eigenresonanz oder Eigenresonanzen des Schwingungselements derart ausgelegt ist, dass die Eigenresonanz oder die Eigenresonanzen außerhalb eines Messbereichs liegt oder liegen.

2. Akustikwandler nach Anspruch 1, **dadurch gekennzeichnet, dass** der Signalstrahl und/oder der Referenzstrahl und/oder der erste Abtaststrahl und/oder der erste Messstrahl teilweise oder vollständig in einem Lichtleiter (121) geführt sind.

3. Akustikwandler nach einem der vorherigen Ansprüche, **dadurch gekennzeichnet, dass** das Schwingungselement akustisch transparent ist.

4. Akustikwandler nach einem der vorherigen Ansprüche, **dadurch gekennzeichnet, dass** das Schwingungselement durch ein Schutzmedium, insbesondere einer zweiten Flüssigkeit, gekapselt ist.

5. Akustikwandler nach einem der vorherigen Ansprüche, **dadurch gekennzeichnet, dass** der Hohlkörper (251) eine Hohlkugel ist.

6. Akustikwandler nach einem der vorherigen Ansprüche, **dadurch gekennzeichnet, dass** der Hohlraum ein mittels Druck kompressibles Medium aufweist.

7. Akustikwandler nach einem der vorherigen Ansprüche, **dadurch gekennzeichnet, dass** die Lichtquelle eine breitbandige Laserlichtquelle ist.

8. Akustikwandler nach einem der vorherigen Ansprüche, **dadurch gekennzeichnet, dass** der Abtaststrahl durch ein Filter (123), insbesondere ein Faser-Bragg-Gitter-Filter, geführt ist.

9. Akustikwandlersystem, welches einen Akustikwandler nach einem der Ansprüche 1 bis 8 aufweist, mit einem zweiten Abtaststrahl und einem zweiten Messstrahl, wobei die Messstrahlen derart angeordnet sind, dass die Messstrahlen einen Winkel oder einen Raumwinkel bilden.

10. Akustikwandlersystem nach Anspruch 9, das einen dritten Abtstastrahl und einen dritten Messstrahl aufweist, wobei die Messstrahlen derart angeordnet sind, dass die Messstrahlen einen Winkel oder einen Raumwinkel bilden.

11. Akustikwandlersystem nach einem der Ansprüche 9 oder 10, **dadurch gekennzeichnet, dass** die zwei Messstrahlen oder im Rückbezug auf Anspruch 10 die drei Messstrahlen von dem Schwingungselement ausgesandt sind.

12. Akustikwandlerarray, **gekennzeichnet durch** eine Mehrzahl von Akustikwandlersystemen nach einem der Ansprüche 9 bis 11 und/oder einer Mehrzahl von Akustikwandlern nach einem der Ansprüche 1 bis 8.

13. Sonar, welches ein Akustikwandlerarray nach Anspruch 12 oder ein Akustikwandlersystem nach einem der Ansprüche 9 bis 11 oder einen Akustikwandler nach einem der Ansprüche 1 bis 8 aufweist.

14. Wasserfahrzeug, insbesondere Schiff oder U-Boot, welches ein Sonar nach Anspruch 13 oder ein Akustikwandlerarray nach Anspruch 12 oder ein Akustikwandlersystem nach einem der Ansprüche 9 bis 11 oder einen Akustikwandler nach einem der Ansprüche 1 bis 8 aufweist.

## Claims

1. Acoustic converter (101), in particular a hydrophone (103), with an interferometer and an associated vibration element (251), which is maintained by a support, wherein the interferometer comprises a light source (111), a first signal beam (113), a signal beam splitter, a first reference beam (115), a first scanning beam (117), a first measuring beam (119) and an optical sensor (141), wherein the light source emits the signal beam and the reference beam and the first measuring beam are superimposed onto the optical sensor, wherein the first scanning beam is directed to the vibration element and the first measuring beam causing a Doppler shift with respect to the first scanning beam based on a vibration of the vibration element, and the vibration element is arranged in a first liquid, **characterized in that** the vibration element is a hollow body with a separate cavity and a self-resonance or self-resonances of the vibration element is designed in such a way that the self-resonance or the self-resonances is or are outside a measuring range.

2. Acoustic converter according to claim 1, **characterized in that** the first signal beam and/or the reference beam and/or the first scanning beam and/or the first measuring beam are fully or partially guided in an optical wave guide (121).

3. Acoustic converter according to one of the previous claims, **characterized in that** the vibration element is acoustically transparent.

4. Acoustic converter according to one of the previous claims, **characterized in that** the vibration element is fully enclosed in a protective medium, especially a second liquid.

5. Acoustic converter according to one of the previous claims, **characterized in that** the hollow body (251) is a hollow sphere.

6. Acoustic converter according to one of the previous claims, **characterized in that** the hollow body features a medium that is compressible by pressure.

7. Acoustic converter according to one of the previous claims, **characterized in that** the light source is a broadband laser light source.

8. Acoustic converter according to one of the previous claims, **characterized in that** the scanning beam is guided through a filter (123), especially a fiber Bragg grating filter.

9. Acoustic converter system featuring an acoustic converter according to one of the claims 1 to 8, with a second scanning beam and a second measuring beam, wherein the measuring beams are arranged in such a way that the measuring beams form an angle or a solid angle.

10. Acoustic converter system according to claim 9, comprising a third scanning beam and a third measuring beam, wherein the measuring beams are arranged in such a way that the measuring beams form an angle or a solid angle.

11. Acoustic converter system according to claim 9 or 10, **characterized in that** the two measuring beams or in reference back to claim 10 the three measuring beams are emitted by the vibration element.

12. Acoustic converter array, **characterized by** more than one acoustic converter system according to one of the claims 9 to 11 and/or more than one acoustic converter according to one of the claims 1 to 8.

13. Sonar comprising an acoustic converter array according to claim 12 or an acoustic converter system according to one of the claims 9 to 11 or an acoustic converter according to one of the claims 1 to 8.

14. Watercraft, especially a ship or submarine comprising a sonar according to claim 13 or an acoustic converter array according to claim 12 or an acoustic converter system according to one of the claims 9 to 11 or an acoustic converter according to one of the claims 1 to 8.

## Revendications

1. Transducteur acoustique (101), notamment hydrophone (103), comprenant un interféromètre et un élément oscillant (251), lequel est maintenu par un élément porteur, l'interféromètre possédant une source de lumière (111), un rayon de signal (113), un diviseur de rayon de signal, un rayon de référence (115), un premier rayon de palpage (117), un premier rayon de mesure (119) et un capteur optique (141), la source de lumière émettant le rayon de signal et le rayon de référence et le premier rayon de mesure étant superposés sur le capteur optique, le premier rayon de palpage étant dirigé sur l'élément oscillant et le premier rayon de mesure exprimant un double décalage en référence au premier rayon de palpage en raison d'une oscillation de l'élément oscillant, et l'élément oscillant étant disposé dans un premier liquide, **caractérisé en ce que** l'élément oscillant est un corps creux doté d'un espace creux fermé et une résonance propre ou des résonances propres de l'élément oscillant étant conçues de telle sorte que la résonance propre ou les résonances propres se trouve ou se trouvent en dehors d'une plage de mesure.

2. Transducteur acoustique selon la revendication 1, **caractérisé en ce que** le rayon de signal et/ou le rayon de référence et/ou le premier rayon de palpage et/ou le premier rayon de mesure sont guidés partiellement ou entièrement dans un guide d'ondes optiques (121).

3. Transducteur acoustique selon l'une des revendications précédentes, **caractérisé en ce que** l'élément oscillant est acoustiquement transparent.

4. Transducteur acoustique selon l'une des revendications précédentes, **caractérisé en ce que** l'élément oscillant est encapsulé par un fluide de protection, notamment un deuxième liquide.

5. Transducteur acoustique selon l'une des revendications précédentes, **caractérisé en ce que** le corps creux (251) est une sphère creuse.

6. Transducteur acoustique selon l'une des revendications précédentes, **caractérisé en ce que** l'espace creux possède un fluide compressible au moyen de la pression.

7. Transducteur acoustique selon l'une des revendications précédentes, **caractérisé en ce que** la source de lumière est une source de lumière laser à large bande.

8. Transducteur acoustique selon l'une des revendications précédentes, **caractérisé en ce que** le rayon de palpage est guidé à travers un filtre (123), notamment un filtre à fibre à réseau de Bragg.

9. Système transducteur acoustique, lequel possède un transducteur acoustique selon l'une des revendications 1 à 8, comprenant un deuxième rayon de palpage et un deuxième rayon de mesure, les rayons de mesure étant disposés de telle sorte que les rayons de mesure forment un angle ou un angle solide.

10. Système transducteur acoustique selon la revendication 9, qui possède un troisième rayon de palpage et un troisième rayon de mesure, les rayons de mesure étant disposés de telle sorte que les rayons de mesure forment un angle ou un angle solide.

11. Système transducteur acoustique selon l'une des revendications 9 ou 10, **caractérisé en ce que** les deux rayons de mesure ou, en référence à la revendication 10, les trois rayons de mesure sont émis par l'élément oscillant.

12. Réseau de transducteurs acoustiques, **caractérisé par** une pluralité de systèmes transducteurs acoustiques selon l'une des revendications 9 à 11 et/ou une pluralité de transducteurs acoustiques selon l'une des revendications 1 à 8.

13. Sonar, lequel possède un réseau de transducteurs acoustiques selon la revendication 12 ou un système transducteur acoustique selon l'une des revendications 9 à 11 ou un transducteur acoustique selon l'une des revendications 1 à 8.

14. Véhicule nautique, notamment navire ou sous-marin, lequel possède un sonar selon la revendication 13 ou un réseau de transducteurs acoustiques selon la revendication 12 ou un système transducteur acoustique selon l'une des revendications 9 à 11 ou un transducteur acoustique selon l'une des revendications 1 à 8.
